# EUROPEAN PATENT APPLICATION

(11) **EP 4 600 028 A1**
(43) Date of publication of application: **13.08.2025**
(21) Application number: 25156140.3
(22) Date of filing: 06.02.2025
(51) Int. Cl.: B29C 65/56, B29C 65/78, B65H 21/00, B29C 65/02

(54) **MATERIAL JOINING DEVICE AND METHOD**

(30) Priority: 08.02.2024 US 202463551125 P; 23.01.2025 US 202519034903
(71) Applicant: The Steelastic Company LLC, Cuyahoga Falls, OH 44223 (US)
(72) Inventor: MERSALO, Sepe, 02480 Kirkkonummi (FI); IRWIN, Robert Thomas, Hartville, Ohio, 44632 (US)
(74) Representative: Müller-Boré & Partner Patentanwälte PartG mbB

(57) **Abstract**

A material-joining device is provided for joining a trailing end of a first material sheet to a leading end of a new supply of material sheeting. The joining device comprises a main body and a gate coupled to the main body. A plurality of rods are moveably held within the main body along with at least one actuator coupled to the plurality of rods. The actuators can move the rods from a retracted position to an extended position. The gate includes a plurality of chambers aligned with the rods. The chambers accommodate a portion of the rods when in the extended position. Using the material-joining device, at least portions of the first material and the new supply of material fit within the space between the main body and the gate. When the at least one actuator moves the rods to the extended position, the separate material sheets are joined together.

## Description

### TECHNICAL FIELD

Aspects herein relate to a method and device for joining materials.

### BACKGROUND

Some manufacturing processes convey and feed a sheet of material, such as rubber, into other downstream machinery, such as an extruder. At some point, the end of the material is encountered. To enable the process to continue, a new sheet of material is needed. One solution is to splice, manually, the leading end of the new material to the trailing end of the existing material being conveyed. This manual process involves an operator cutting both the trailing end of the existing material and the leading end of the new material, and manually intertwining the two ends. This process often involves sharp knives, and sometimes involves heating elements. This manual process also requires the operator to be present at the machine as the trailing end of the existing material becomes available for splicing, requiring the operator to be present at the machine for an extended period of time. The manual process is cumbersome, and can result in a large amount of the material in one section, which can adversely affect the downstream processing (such as overfeeding an extruder). A more efficient and effective way of joining the material used in the process is needed.

### DESCRIPTION OF THE DRAWINGS

Examples of aspects herein are described in detail below with reference to the attached drawing figures, wherein:
FIG. 1 illustrates a schematic view of the system in one state, in accordance with aspects herein;
FIG. 2 illustrates a view similar to FIG. 1, with certain components in a different state, in accordance with aspects herein;
FIG. 3 illustrates a view similar to FIG. 1, with certain components in a different state, in accordance with aspects herein;
FIG. 4A illustrates a perspective view of the material joining device with the gate in an open condition, in accordance with aspects herein;
FIG. 4B illustrates a view similar to FIG. 4A, but shown with partial views of the sheeting material in place;
FIG. 5 illustrates a view of the material joining device of FIG. 4A from a different perspective, with parts removed to show details of construction, in accordance with aspects herein;
FIG. 6A illustrates a side view of the material joining device, shown with the retention bar in an open condition, in accordance with aspects herein;
FIG. 6B illustrates a view similar to FIG. 6A, but shown with the retention bar in a closed condition, and shown with partial views of the sheeting material in place, in accordance with aspects herein;
FIG. 7A illustrates a perspective view of the material joining device, shown with the gate closed and shown with portions hidden to reveal details of construction, in accordance with aspects herein;
FIG. 7B illustrates a perspective view similar to FIG. 7A, but shown with the actuators and rods in a forward, splicing position, in accordance with aspects herein;
FIG. 8 illustrates a cross-section of FIG. 7A, shown with portions of the material sheets, in accordance with aspects herein; and
FIG. 9 illustrates a method of joining material, in accordance with aspects herein.

### DETAILED DESCRIPTION

The subject matter of the present invention is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

In certain manufacturing processes, sheets of material are used as a supply source for further downstream processing. For example, rubber sheeting may be fed onto a conveyor and into an extruder. In the past, an operator would monitor the sheeting supply being fed onto the conveyor. When the sheeting supply was nearing the end, the operator would manually splice the leading end of a new supply of sheeting to the trailing end of the existing supply of sheeting. This cumbersome process results in inefficiencies noted above, and could result in manufacturing difficulties if not performed properly.

At a high level, aspects herein contemplate a material-joining device for joining a first material (such as a trailing end of an existing supply rubber sheeting) to a second material (such as a leading end of a new supply of rubber sheeting). In some aspects, the joining device comprises a main body and a gate coupled to the main body. The gate is moveable with respect to the main body between at least a first position farther from the main body and a second position closer to the main body than the first position. In some aspects, the gate is hingedly coupled to the main body. Even in the second position, the gate is spaced from the main body. The material-joining device further comprises a plurality of rods moveably held within one of the main body and the gate with at least one actuator (such as an air cylinder) coupled to the plurality of rods. The actuators are configured to move the rods from a retracted position to an extended position. The other of the main body and the gate not holding the plurality of rods further comprises a plurality of chambers aligned with the rods. The chambers define a rod opening and accommodate a portion of the rods when the cylinders move the rods to the extended position. Using the material-joining device, at least portions of the first material and the second material fit within the space between the main body and the gate in the second position. With the material sheets in position between the main body and the gate, when the at least one actuator moves the rods to the extended position, the separate material sheets are joined together. In some aspects, the first material sheet includes a trailing end of an existing material supply, and the second material sheet includes a leading end of a new material supply.

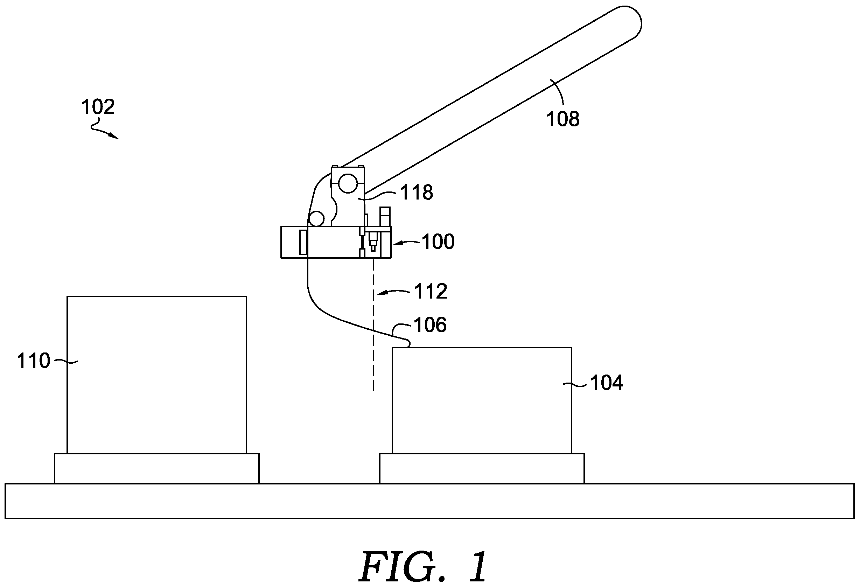

FIG. 1 schematically illustrates a material-joining device 100 within a manufacturing system 102. In the manufacturing system 102, a first material supply 104 supplies a first material sheet 106 through the material-joining device 100 and onto a conveyor 108. The conveyor 108 moves the first material sheet 106 downstream for further processing. In some aspects, the first material sheet 106 is a sheet of rubber material delivered by the conveyor 108 to an extruder (not shown). The system 102 also includes a second material supply 110 that is used when the first material supply 104 is exhausted, as further described herein. As shown by the dotted line 112, the material-joining device 100 includes a sensor (such as a light curtain or laser) to detect the trailing end or edge of the first material sheet 106.

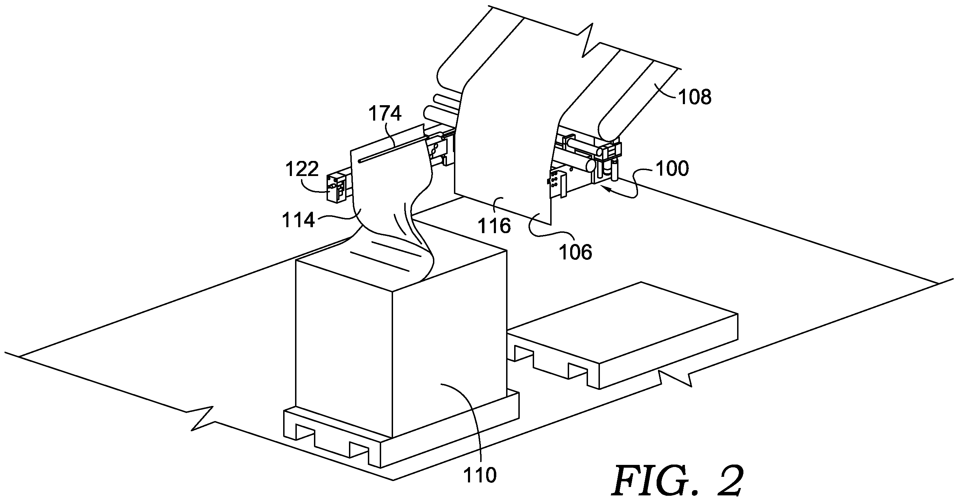

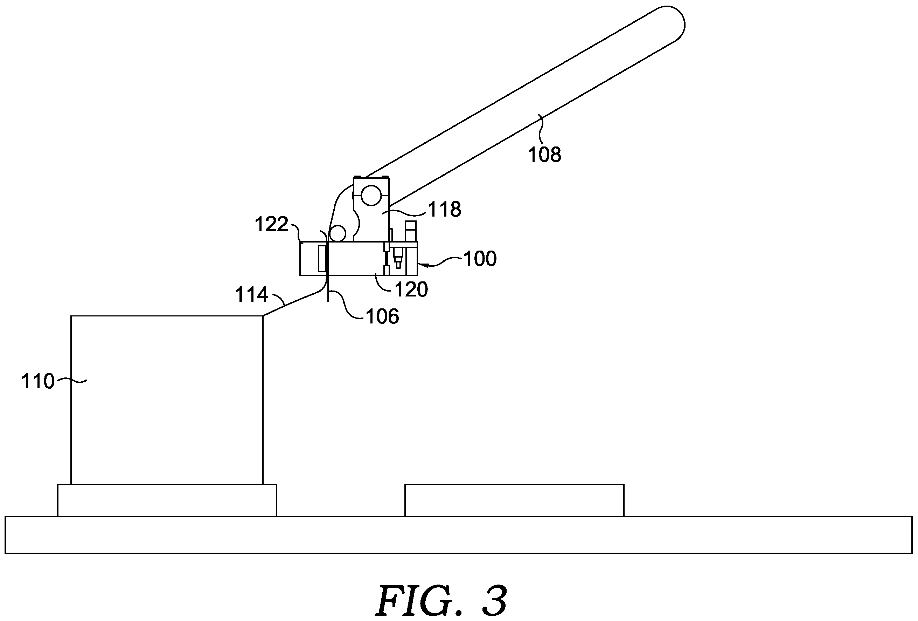

FIG. 2 schematically illustrates a second material sheet 114 from the second material supply 110 being loaded into the material-joining device 100. While a trailing end 116 of the first material sheet 104 is shown in FIG. 2, the second material sheet 114 would typically be loaded into the material-joining device 100 at an earlier point in time, as described further herein. FIG. 3 schematically illustrates the manufacturing system 102 in a state ready for splicing or joining the trail end of the first material sheet 106 to the leading end of the second material sheet 114.

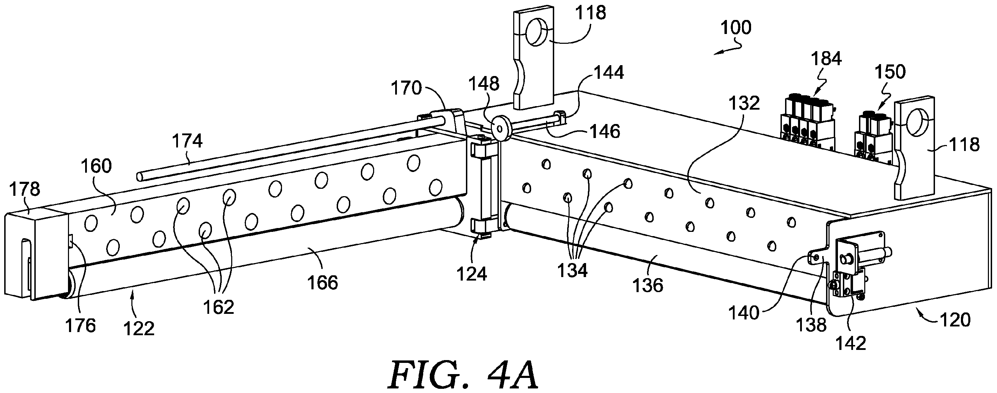

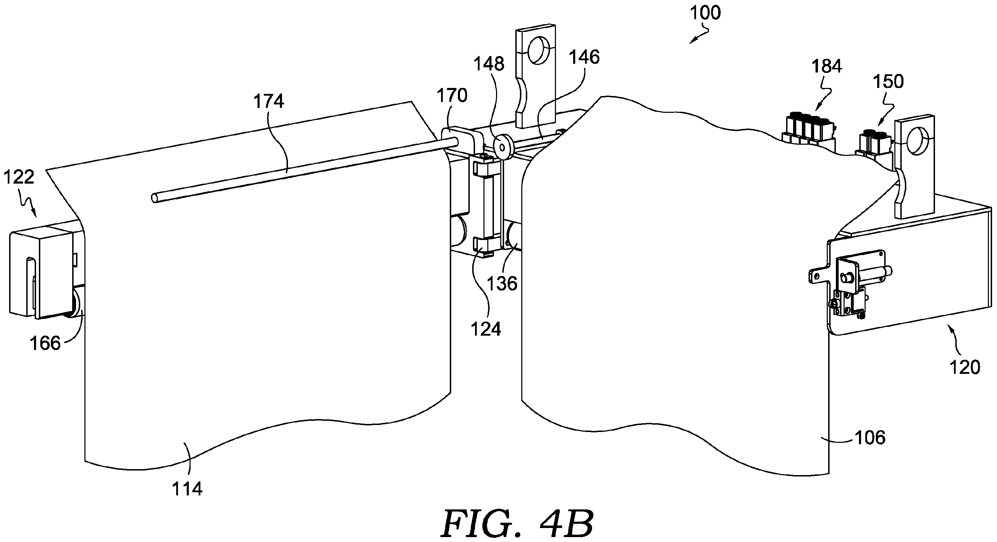

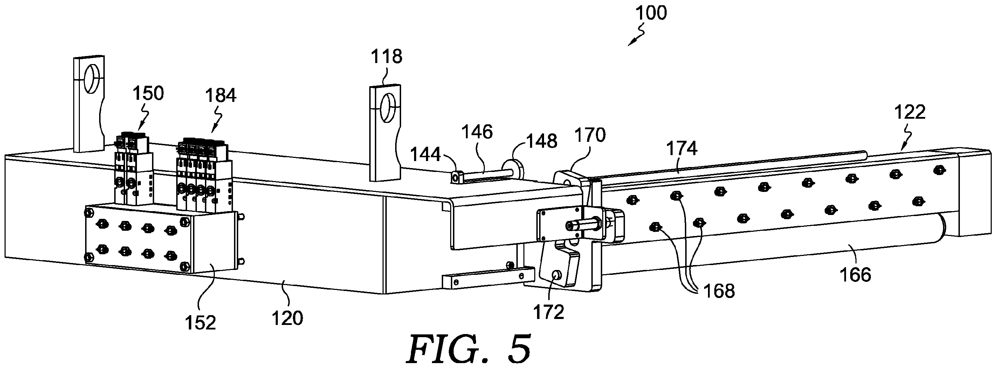

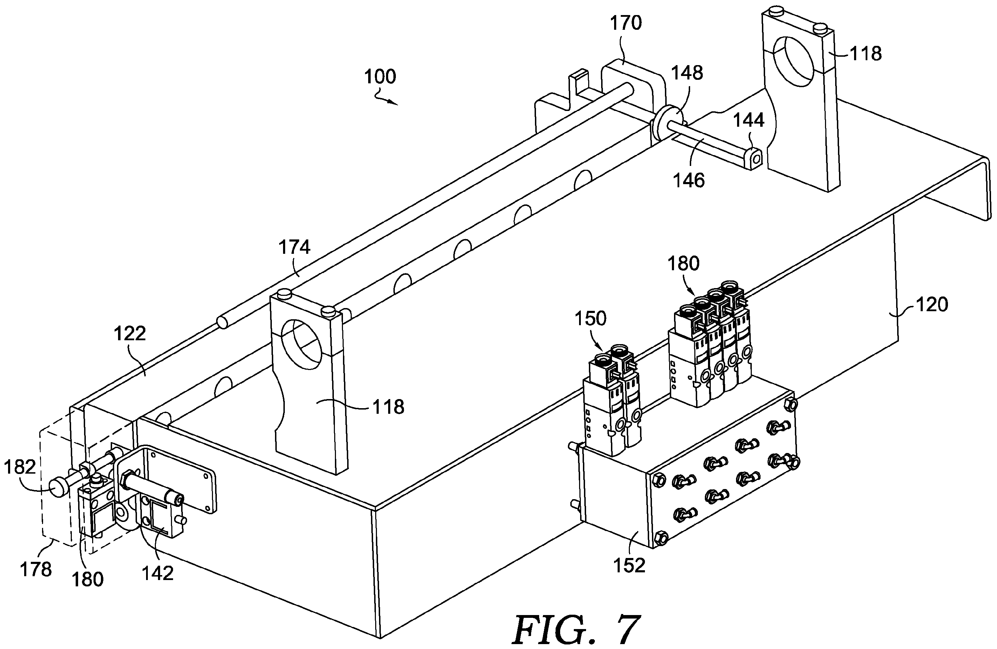

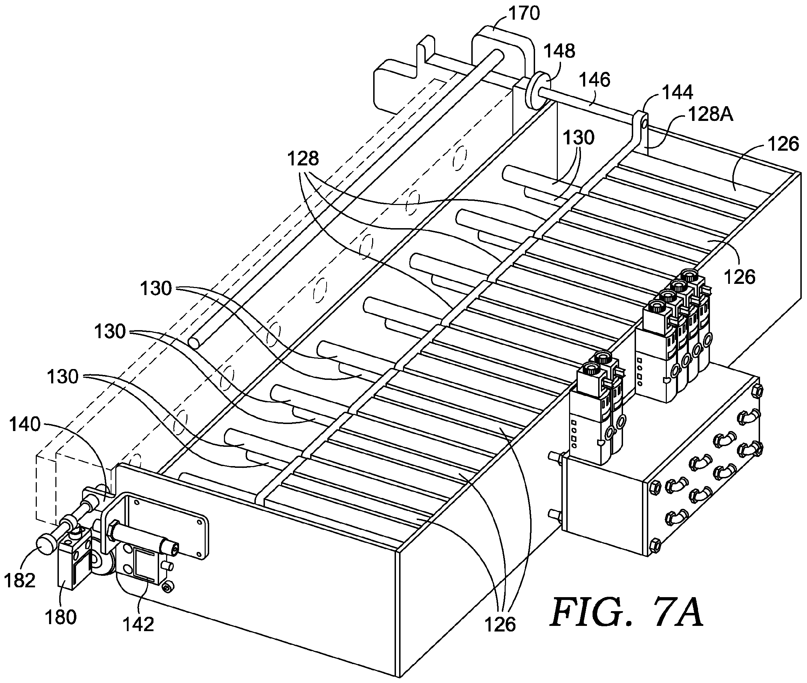

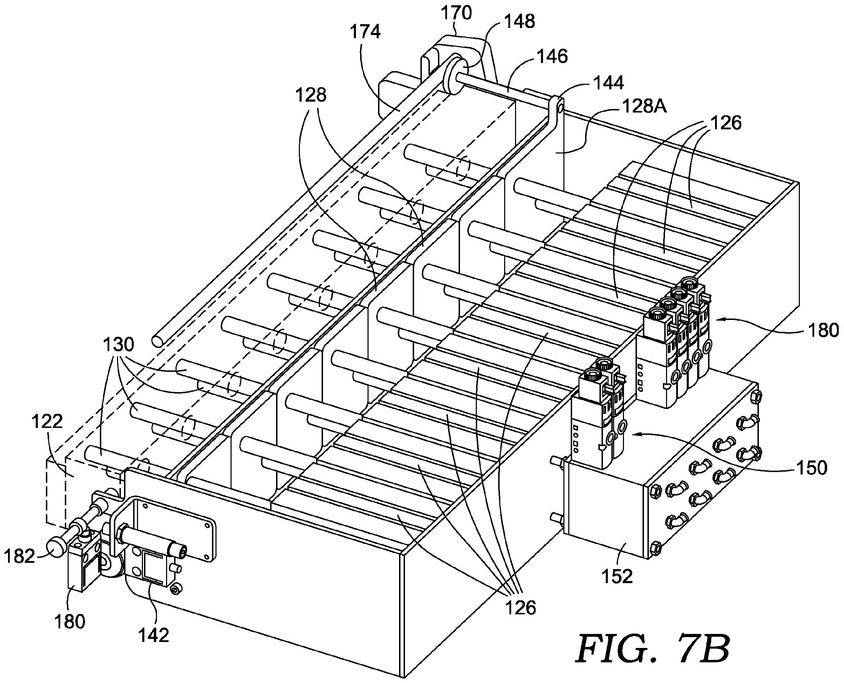

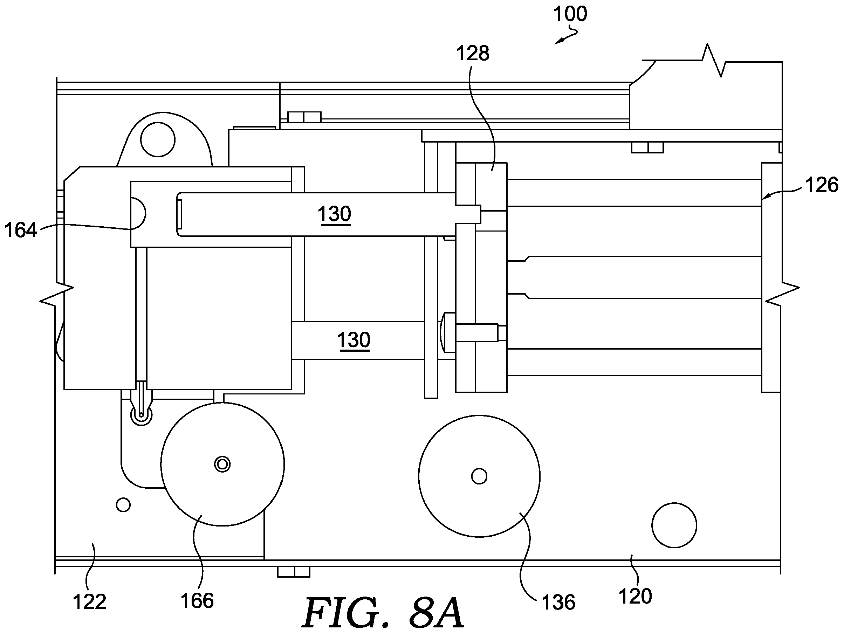

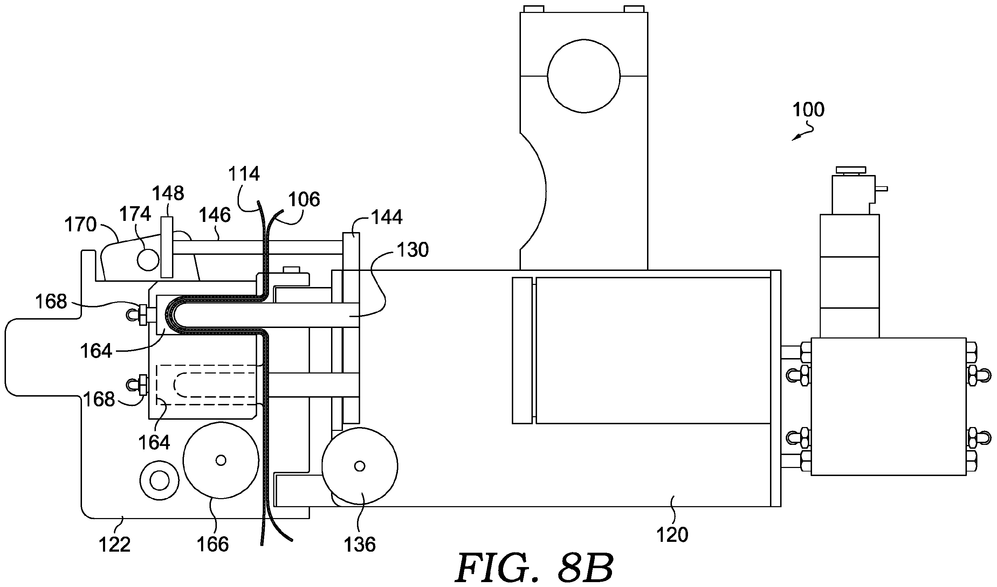

FIG. 4A illustrates the material-joining device 100 in more detail. In some aspects, the material-joining device 100 includes a main body 120 and a gate 122. In some aspects, the gate 122 is moveable from a first position farther from the main body 120 (as shown in FIG. 4A) to a second position closer to the main body 120 (as shown in FIG. 7, for example). In some aspects, the gate 122 is hingedly coupled to the main body with a hinge 124. The main body 120 may include mounting arms 118 used to secure the material-joining device 100 in place (relative to the conveyor 108). As best seen in FIG. 7A, the main body 120 includes at least one actuator 126, such as an air cylinder, for example. The terms "actuator" and "cylinder" may be used interchangeably throughout this disclosure. In some aspects, the main body 120 includes eight actuators 126. Each actuator 126 includes an end plate 128 that is moveable from a retracted position (shown in FIG. 7A) to an extended position (shown in FIG. 7B). A number of rods 130 are fixedly secured to the end plate 128. For example, in some aspects, two rods 130 are coupled to each end plate 128. In some aspects, the rods 130 on each end plate are diagonally spaced or are off-set from one another. As best seen in FIG. 8, the outer ends of the rods 130 may be rounded or provided with a chamfered perimeter. Returning to FIG. 4A, the main body 120 also includes, in some aspects, a guide plate 132 with a series of spaced holes 134 aligned with the rods 130. The main body 120 may also include a roller 136 extending across the lower portion of the main body 120 below the guide plate 132. The side of the main body 120 opposite the hinge 124 may, in some aspects, include an outwardly extending tab 138 having a hole 140 to latch the gate 122 in the closed position, as further described herein. A sensor or position switch 142 may be mounted to the side of the main body 120. The switch 142 detects a closed condition for the gate 122. As best seen in FIGS. 4A and 7A, the outer one of the end plates 128 (labeled 128A), includes, in some aspects, an upwardly extending tab 144. A release pin 146 is fixedly coupled to the tab 144. The release pin 144 extends away from the end plate 128A and toward the guide plate 132. In some aspects, the outer end of the release pin 144 includes a disc 148 having a larger diameter than the release pin 144. The cylinders 126 may be controlled via a number of solenoids 150. In some aspects, two solenoids 150 are used to control the cylinders 126, with one solenoid activating the four cylinders nearest the hinge 124 and the other controlling the four cylinders farthest from the hinge 124. In this way, the material-joining device 100 can accommodate material sheets of different widths (for example, only the four cylinders nearest the hinge might be needed on a narrower sheet of material, whereas all eight cylinders might be needed for material sheets that substantially span the width of the material-joining device 100). In some aspects, the wiring and control logic may be contained within a box 152 on the main body 120 (as seen in FIG. 5).

The gate 122, as noted above, is moveably coupled to the main body 120. The gate 122 includes a guide plate 160 with holes 162 that align with the holes 134 in the guide plate 132 and the rods 130, when the gate 122 is in the closed position (of FIG. 7, for example). As best seen in FIGS. 8A and 8B, behind the guide plate 160 and the holes 162, the gate 122 has a plurality of spaced, internal chambers 164. The holes 162 and the chambers 164 are sized and shaped to accommodate a corresponding rod 130 (when the rod 130 is in an extended position), along with a portion of the first material sheet 106 and the second material sheet 114. Like the main body 120, the gate 122 includes, in some aspects, a roller 166. In some aspects, the roller 166 extends the width of the gate 122. With the gate 122 in the closed position, as seen in FIG. 8A, the roller 166 is spaced apart from the roller 136. In some aspects, each chamber 164 is in fluid communication with an air port 168, as best seen in FIGS. 5 and 8B. The air ports 168 are coupled to a compressed air source, and controlled with one or more solenoids 184, as seen in FIG. 5. While not shown, the air ports 168 are coupled to the solenoids 184 with tubing, as would be known to those of skill in the art. While the main body 120 is shown housing the cylinders 126, end plates 128 and rods 130, and the gate 122 is shown with the chambers 164, in some aspects, the main body 120 could include the chambers 164 and the gate 122 could include the cylinders 126, the end plates 128 and the rods 130.

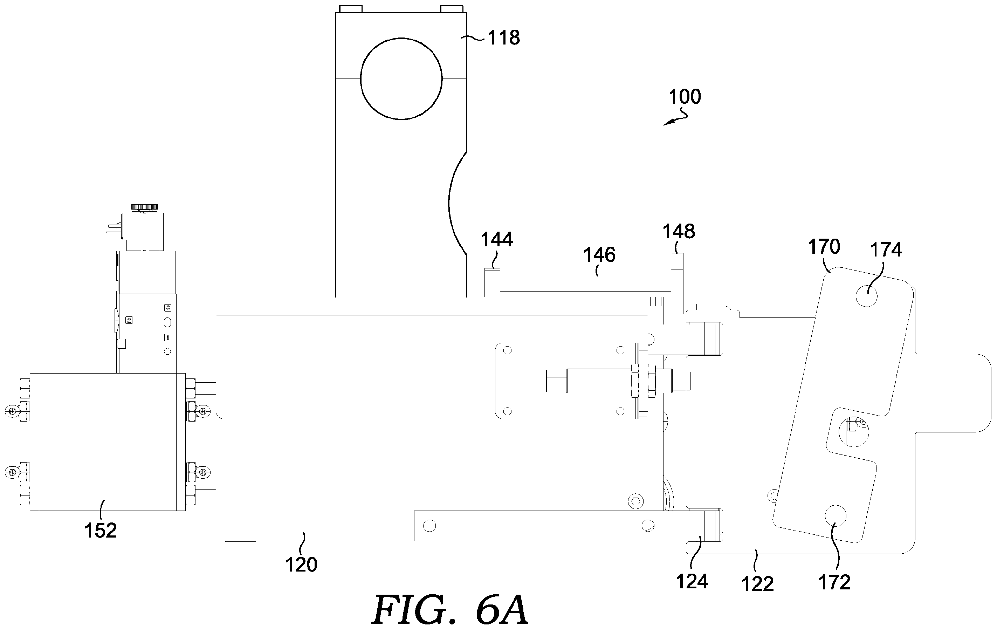

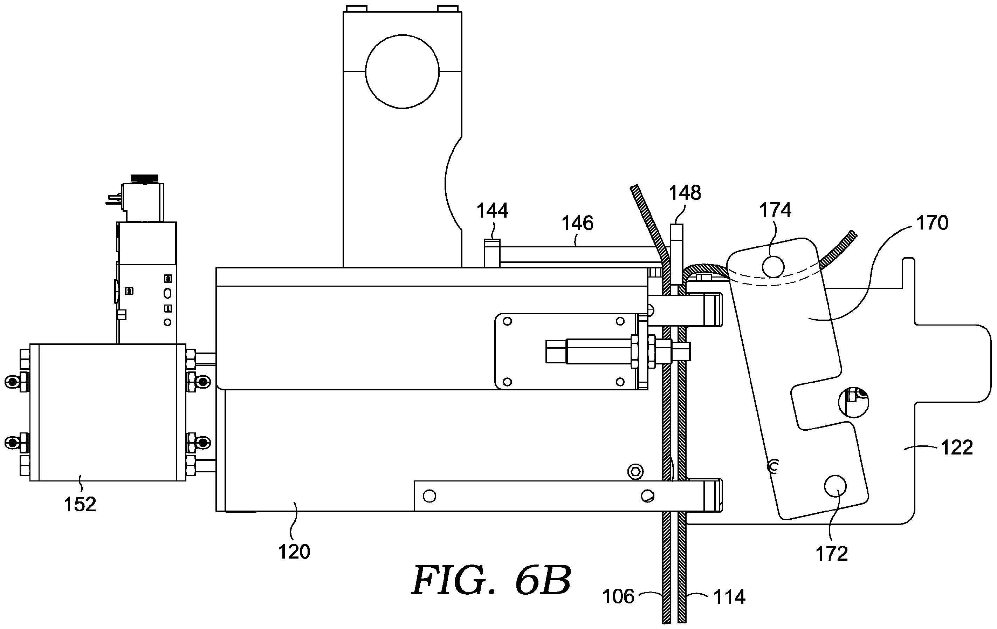

As best seen in FIGS. 4A, 6A and 6B, the gate 122 includes an arm 170 pivotally coupled to the gate 122 adjacent the hinge 124. The arm 170 pivots about the connection shown at 172, as can be seen by comparing FIG. 6A to FIG. 6B. The arm 170 extends upwardly from the connection 172 and extends above the top of the guide plate 160. A retention bar 174 is fixedly coupled to the upper end of the arm 170. In some aspects, the retention bar 174 extends substantially the width of the gate 122. In other aspects, as shown in FIG. 4A, the retention bar 174 extends only a portion of the width of the gate 122. As the arm 170 pivots about the connection 172, the retention bar 174 moves from a position farther from the top of the gate 122 (as shown in FIG. 6A, to a position closer to the top of the gate 122 (as shown in FIG. 6B).

As seen in FIG. 4A, on the side of the gate 122 opposite the hinge 124, the gate 124 includes a slot 176. The slot 176 accommodates the tab 138 when the gate 122 is in the closed position (of FIG. 7, for example). The gate 122 includes a hole (not shown) that is in alignment with the hole 140 when the gate 122 is in the closed position. The gate 122 also includes an outer housing 178. The outer housing 178 (not shown in FIGS. 7-7B) supports a sensor or switch 180. In some aspects, the housing 178 may also include an internal bushing (not shown), in axial alignment with the hole 140 when the gate 122 is in the closed position. With the gate 122 in the closed position, a latch pin 182 may be inserted through the bushing in the housing 178, through the hole 140 in the tab 138, and into the hole in the gate 122. The latch pin 182 holds the gate 122 in the closed position. The sensor 142 determines whether the gate 122 is in the closed position, and the switch 180 determines whether the latch pin 182 is in place.

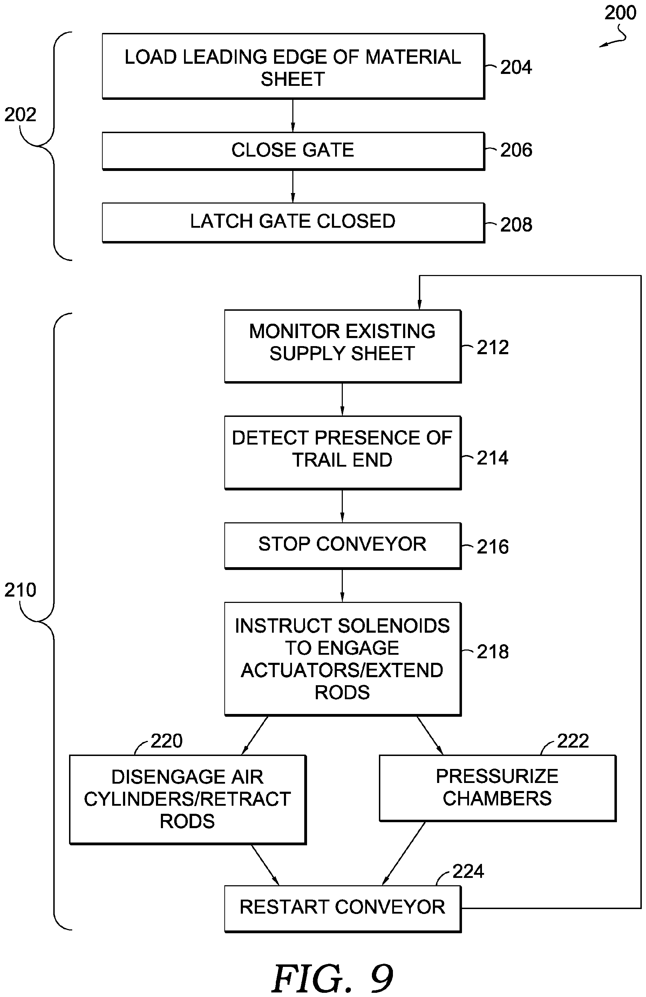

In use, the material-joining device 100 effectively splices or joins the trailing end of one sheet of material (such as first material sheet 106) to the leading end of another sheet of material (such as second material sheet 114). A method 200 of joining materials (using material-joining device 100) is shown in FIG. 9. The method 200 includes a subset of pre-work as shown at 202. The pre-work 202 can be performed as the conveyor 108 is moving the first material sheet 106. As the first material sheet 106 is being fed by the conveyor 108, a new pallet of material (such as second material supply 110) can be moved into place. An operator can then load the leading end of the second material sheet 114, as shown at step 204. Step 204 is performed by the operator removing the latch pin 182, and opening the gate 122 to the position shown in FIG. 4A. Step 204 continues with the operator taking the leading end of the second material sheet 114 and positioning it over the guide plate 160 and below the retention bar 174 (with the retention bar 174 in the position shown in FIG. 6A). The operator can then rotate the arm 170 and the retention bar 174 to the position shown in FIG. 6B. At this point, the retention bar 174 will maintain the second material sheet 114 in place on the gate 122. The operator can then close the gate 122, as shown at step 206, and re-install the latch pin 182. The sensor 142 detects the gate 122 in the closed position, and the sensor 180 detects the presence of the latch pin 182. In some aspects, the operator may also inform the material-joining device 100 (such as through a push-button on a control panel), that the pre-work 202 is complete.

The method 200 further includes a subset of splicing or joining steps indicated at 210. The joining steps include monitoring the existing supply sheet (such as first material sheet 106), as shown at step 212. This monitoring could be done, for example, with a light curtain or other beam sensor on the main body 120, and as indicated by the dotted line 112 in FIG. 1. When the trailing end of the first material sheet 106 is detected, the conveyor 108 is stopped, as shown at step 216. In some aspects, the method 200 will delay for a predetermined amount of time from the detection of the trail end of the first material sheet 106 until the conveyor is stopped. This delay intended to feed the first material sheet 106 until the trailing end is just below the material-joining device 100, as shown in FIG. 3. With the trailing end of the first material sheet 106 detected, and the conveyor 108 stopped, the method 200 continues by instructing the solenoids 150 corresponding to the cylinders 126 to engage, extending the rods 130, as shown at step 218. The number of cylinders 126 and rods 130 that are extended can be a function, at least in part, of the width of the material sheets (with less cylinders 126 and rods 130 needed for narrower material sheets). As the rods 130 extend, the disc 148 contacts the retention bar 174, and rotates the retention bar 174 and the arm 170 back to the open position (such as that shown in FIG. 8). With the rods 130 in the extended position, the ends of the rods 130 extend through the holes 162 in the guide plate 160 and into the chambers 164, as shown in FIGS. 8A and 8B. As the rods 130 enter the chambers 164 (along with a portion of the first material sheet 106 and the second material sheet 114), the air port 168 associated with each chamber allows a free flow of air out of the chamber 164. FIG. 8B also shows the movement of a portion of the first material sheet 106 and the second material sheet 114 into a chamber 164 and around a corresponding rod 130. This action, along all the rods 130 and chambers 164, splices or joins the first material sheet 106 to the second material sheet 114. At this stage in the method 200, the solenoids 150 are instructed to disengage the cylinders 126 and retract the rods 130. In some aspects, at substantially the same time as the rods 130 are retracting, the method 200 includes pressurizing the chambers 164, such as by instructing the solenoids 184 to provide compressed air to the air ports 168 and into the chambers 164. This compressed air serves as an aid in pushing the spliced first material sheet 106 and the second material sheet 114 out of the chambers 164, so as not to shear off the spliced material or otherwise harm the spliced material. With the first material sheet 106 joined to the second material sheet 114, the method 200 continues by restarting the conveyor 108, as shown at step 224. The splicing sub-steps then loop back to the monitoring step 212, as shown by the arrow from step 224 to step 212. At this point, the second material supply 110 effectively becomes the first material supply 104. As the (new) first material supply 104 is fed onto the conveyor 108, the operator can execute the method sub-steps 202, to ready a (new) second material supply.

The method 200 and the material-joining device 100 do not require the operator to be present at the machine as the trailing end of the existing material becomes available for splicing. The pre-work steps 202 can be performed as the operator has time. Further, the method 200 and the material-joining device 100 provide a more-automated process resulting in a more-consistent splicing of the first material sheet 106 to the second material sheet 114, both in the quality of the splice and in the amount of material at the spliced intersection. The result is a more efficient and effective material handling process, with less downtime and higher quality splicing.

The following clauses represent example aspects of concepts contemplated herein. Any one of the following clauses may be combined in a multiple dependent manner to depend from one or more other clauses. Further, any combination of dependent clauses (clauses that explicitly depend from a previous clause) may be combined while staying within the scope of aspects contemplated herein. The following clauses are examples and are not limiting.

Clause 1. A material-joining device for joining a first material to a second material, comprising: a main body; a gate coupled to the main body and moveable with respect to the main body between at least a first position farther from the main body and a second position closer to the main body than the first position, the gate being spaced from the main body in the second position; a plurality of rods moveably held within one of the main body and the gate; at least one actuator coupled to the plurality of rods, the actuator configured to move the rods from a retracted position to an extended position; and the other of the main body and the gate not holding the plurality of rods comprising a plurality of chambers aligned with the rods, the chambers defining a rod opening and accommodating a portion of the rods when the actuator moves the rods to the extended position; wherein at least portions of the first material and the second material fit within the space between the main body and the gate in the second position, and wherein when the at least one actuator moves the rods to the extended position, the first material and the second material are joined together.

Clause 2. The material-joining device of clause 1, wherein the actuator and the rods are held within the main body and the gate comprises the plurality of chambers aligned with the rods.

Clause 3. The material-joining device of any of clauses 1-2, further comprising a retention bar pivotally coupled to a portion of the gate, the retention bar pivotable between an open position allowing a material sheet to extend under the retention bar, and a closed position with the retention bar holding a material sheet in place.

Clause 4. The material-joining device of any of clauses 1-3, wherein the gate is hingedly coupled to the main body.

Clause 5. The material-joining device of any of clauses 1-4, wherein the main body comprises a plurality of actuators, each actuator coupled to a respective subset of the plurality of rods.

Clause 6. The material-joining device of any of clauses 1-5, wherein a subset of the actuators is operable in unison.

Clause 7. The material-joining device of any of clauses 1-6, wherein a release pin is coupled to at least one of the actuators, the release pin extending above the main body and positioned to engage the retention bar as the actuator moves the respective rods to the extended position, the release pin moving the retention bar from the closed position to the open position.

Clause 8. The material-joining device of any of clauses 1-7, further comprising at least one air port coupled to each chamber to allow air flow into each chamber, each air port positioned opposite the rod opening.

Clause 9. The material-joining device of any of clauses 1-8, further comprising a compressed air source coupled to the at least one air port, and wherein the at least one air port allows a free flow of air out of the port in one condition, and the compressed air source supplies a compressed air out of the port in a second condition.

Clause 10. The material-joining device of any of clauses 1-9, further comprising a first sensor to detect the trailing end of the first material.

Clause 11. The material-joining device of any of clauses 1-10, further comprising a second sensor to detect when the gate is in the second position.

Clause 12. The material-joining device of any of clauses 1-11, further comprising a first roller coupled to the main body adjacent the space between the main body and the gate, and a second roller coupled to the gate adjacent the space between the main body and the gate with the gate in the second position, the first roller being spaced apart from the second roller with the gate in the second position.

Clause 13. The material-joining device of any of clauses 1-12, wherein each of the rods includes a rounded outer end.

Clause 14. A method of joining a first material sheet to a second material sheet, comprising: loading a leading end of the second material sheet into a material joining device; moving the second material to a position adjacent the first material; detecting a trailing end of the first material approaching the material joining device; and using the material joining device, driving a plurality of rods into at least a portion of the first material and the second material, to join the leading end of the second material to the trailing end of the first material.

Clause 15. The method of joining of clause 14, wherein the driving of each of the plurality of rods includes, driving the rod, a portion of the first material sheet and a portion of the second material sheet into a chamber on the material-joining device.

Clause 16. The method of joining of any of clauses 14-15, wherein the method further includes withdrawing the rods from the chambers.

Clause 17. The method of joining of any of clauses 14-16, wherein the method further includes pressurizing the chambers as the rods are withdrawn.

Clause 18. The method of joining comprising of any of clauses 14-17, wherein the first material sheet is fed by a conveyor, the method further comprising, upon detecting the trailing end of the first material, stopping the conveyor.

Clause 19. The method of joining comprising of any of clauses 14-18, further comprising starting the conveyor after the rods are withdrawn from the chambers.

Clause 20. The method of joining comprising of any of clauses 14-19, further comprising determining a width of the first material sheet and the second material sheet, and determining a subset of the plurality of rods to drive, based upon the determined width of the first material sheet and the second material sheet.

Aspects of the present disclosure have been described with the intent to be illustrative rather than restrictive. Alternative aspects will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims.

## Claims

1. A material-joining device for joining a first material to a second material, comprising:
a main body;
a gate coupled to the main body and moveable with respect to the main body between at least a first position farther from the main body and a second position closer to the main body than the first position, the gate being spaced from the main body in the second position;
a plurality of rods moveably held within one of the main body and the gate;
at least one actuator coupled to the plurality of rods, the actuator configured to move the rods from a retracted position to an extended position; and
the other of the main body and the gate not holding the plurality of rods comprising a plurality of chambers aligned with the rods, the chambers defining a rod opening and accommodating a portion of the rods when the actuators move the rods to the extended position;
wherein at least portions of the first material and the second material fit within the space between the main body and the gate in the second position, and wherein when the at least one actuator moves the rods to the extended position, the first material and the second material are joined together.

2. The material-joining device of claim 1, wherein the actuators and the rods are held within the main body and the gate comprises the plurality of chambers aligned with the rods.

3. The material-joining device of claim 1 or 2, further comprising a retention bar pivotally coupled to a portion of the gate, the retention bar pivotable between an open position allowing a material sheet to extend under the retention bar, and a closed position with the retention bar holding a material sheet in place.

4. The material-joining device of any one of claims 1 to 3, wherein the gate is hingedly coupled to the main body.

5. The material-joining device of any one of claims 1 to 4, wherein the main body comprises a plurality of actuators, each actuator coupled to a respective subset of the plurality of rods,
wherein, optionally, a subset of the actuators is operable in unison.

6. The material-joining device of any one of claims 1 to 5, wherein a release pin is coupled to at least one of the actuators, the release pin extending above the main body and positioned to engage the retention bar as the actuator moves the respective rods to the extended position, the release pin moving the retention bar from the closed position to the open position.

7. The material-joining device of any one of claims 1 to 6, further comprising at least one air port coupled to each chamber to allow air flow into each chamber, each air port positioned opposite the rod opening,
wherein the material-joining device optionally further comprises a compressed air source coupled to the at least one air port, and wherein the at least one air port allows a free flow of air out of the port in one condition, and the compressed air source supplies a compressed air out of the port in a second condition.

8. The material-joining device of any one of claims 1 to 7, further comprising a first sensor to detect the trailing end of the first material, and/or
further comprising a second sensor to detect when the gate is in the second position.

9. The material-joining device of any one of claims 1 to 8, further comprising a first roller coupled to the main body adjacent the space between the main body and the gate, and a second roller coupled to the gate adjacent the space between the main body and the gate with the gate in the second position, the first roller being spaced apart from the second roller with the gate in the second position.

10. The material-joining device of any one of claims 1 to 9, wherein each of the rods includes a rounded outer end.

11. A method of joining a first material sheet to a second material sheet, comprising:
loading a leading end of the second material sheet into a material joining device;
moving the second material to a position adjacent the first material;
detecting a trailing end of the first material approaching the material joining device; and
using the material joining device, driving a plurality of rods into at least a portion of the first material and the second material, to join the leading end of the second material to the trailing end of the first material.

12. The method of joining of claim 11, wherein the driving of each of the plurality of rods includes, driving the rod, a portion of the first material sheet and a portion of the second material sheet into a chamber on the material-joining device.

13. The method of joining of any one of claims 11 to 12, wherein the method further includes withdrawing the rods from the chambers,
wherein, optionally, the method further includes pressurizing the chambers as the rods are withdrawn.

14. The method of joining of claim 13, wherein the first material sheet is fed by a conveyor, the method further comprising, upon detecting the trailing end of the first material, stopping the conveyor,
wherein, optionally, the method further comprises starting the conveyor after the rods are withdrawn from the chambers.

15. The method of joining of any one of claims 11 to 14, further comprising determining a width of the first material sheet and the second material sheet, and determining a subset of the plurality of rods to drive, based upon the determined width of the first material sheet and the second material sheet.
